# EUROPEAN PATENT SPECIFICATION

(11) **EP 1 995 589 B1**
(45) Date of publication and mention of the grant of the patent: **01.01.2020**
(21) Application number: 08009385.9
(22) Date of filing: 21.05.2008
(51) Int. Cl.: G01N 27/87

(54) **Flaw detector of wire-rope**
Rissdetektor für ein Drahtseil
Détecteur de faille d'un câble métallique

(30) Priority: 23.05.2007 JP 2007136110
(43) Date of publication of application: 26.11.2008
(73) Proprietor: Hitachi, Ltd., Chiyoda-ku Tokyo 100-8280 (JP)
(72) Inventor: Asai, Daisuke, Tokyo 100-8220 (JP); Ariga, Masaki, Tokyo 100-8220 (JP)
(74) Representative: MERH-IP Matias Erny Reichl Hoffmann Patentanwälte PartG mbB

(56) References cited:
- JP-A- 2000 074 884
- JP-A- 2005 147 985
- JP-A- 2005 274 351
- JP-A- 2008 026 126
- US-B1- 6 492 808

## Description

### Background of the Invention

### (1) Field of the Invention

The present invention relates to a flaw detector of a wire-rope, capable of detecting a damage such as a breakage or the like of a strand in a wire-rope in a used condition without removal of the wire-rope from any of various facilities which utilize wire-ropes, in order to ensure a safety for the facility.

### (2) Description of Related Art

Wire ropes which are used for an elevator, a lift, a cable car, a crane and the like have a risk of successive fracture of steel wires as constitutional elements of the wire-rope, due to its fatigue or abrasion, the degree of the fracture increasing with time due to aging effect. If the degree of the fracture exceeds a predetermined value, it is determined that the service life of the wire-rope has been expired, and accordingly, the wire-rope is replaced with new one. Thus, a periodical inspection has to be carried out so as to measure a degree of fracture of steel wires in order to evaluate whether the wire-rope is still used in safety or not.

Heretofore, visual inspection has been carried out for inspecting a degree of fracture of a wire-rope in use. Such a visual inspection has not been practical since a long working time is required for a long wire-rope.

Thus, as disclosed in, for example, Patent Document 1 (JP-A-7-198684, page 7 and Fig. 1), there has been proposed a portable flaw detector (a wire-rope tester) utilizing an electromagnetic flaw detection process, for quantitatively measure a degree of fracture of a wire-rope, which is capable of facilitating a maintenance service for a wire-rope which is laid along the ceiling of a building at a higher level, as used for a crane or the like, or in particular for a wire-rope laid in a narrow inspection space within, for example, an elevator, wherein the wire-rope is magnetized in its longitudinal direction by using a set of permanent magnets, and probe coils for detecting a magnetic flux leaking from steel wires are arranged among the permanent magnets so as to inspect a breakage of the steel wire.

Further, there has been also known, as disclosed in, for example, Patent Document 2 (JP-A-2002-5896, page 8 and Fig. 2), there has been known such a method that those of leakage magnetic fluxes detected by magnetic sensors arranged in the circumferential direction of a wire-rope, which exceed a predetermined reference value are extracted as damages signals relating to the strands in order that damages such as breakages or local abrasions at several positions are precisely detected by using a leakage magnetic flux process, and then whether or not these damages have the degrees that require the replacement of wire-ropes is automatically determined.

JP 2000 074884 A discloses a flaw detector including a plurality of magnetic sensors containing at least a pair of magnetic sensor pairs for detecting a generated magnetic field in an overhead wire and plural variable amplifying means for amplifying detected signals, wherein the variable amplifying means change amplifying degrees in response to a total value of detected values of the magnetic field.

US 6492 808 B1 discloses a magnetic non-destructive method and an apparatus for measurement of a cross sectional area of steel wires magnetized by longitudinally spaced poles, and for detecting flaws of the wire. A magnetic flux density is measured by at least one pair of sensors placed along a direct line parallel to the wire axis between the poles and at least one additional magnetic sensor placed radially inwards of the poles. The rope cross sectional area corresponds to a sum of the sensor pair signals and flaws are detected by a first difference of signals of the sensor pair. A signal of the additional sensor modified by a weight coefficient depending on a nominal sectional area of the wire is subtracted from the sum of signals of the sensor pair thereby providing a second difference of the signals corresponding to the rope cross sectional area.

Conventionally, steel wires in the outermost layer of the wire-rope, though which the wire-rope makes contact with sheaves or pulleys have been usually broken. However, these years, the wire-ropes are used for various purposes, and further, the structures of the wire-ropes have been complicated. Thus, the steel wires which are located in the inward part of the wire-rope would be possibly broken. In this case, the position where a fracture occurs within the wire-rope should be probed in order to examine the mechanism of a damage.

In the above-mentioned conventional technology, the presence of a fracture of a steel wire is determined in view of the presence of a peak in an output waveform obtained by a magnetic detection means. However, if the position of a fracture of a wire steel is located in the inward part of a wire-rope, the distance between the position of the fracture and the magnetic sensor is long, and according, an output from a magnetic sensor is low. Thus, it is required to incorporate several A/D converters in the magnetic detection means. Thus, calibration is required for the respective A/D converters.

### Brief Summary of the Invention

The present invention is directed to solve the above-mentioned conventional problems, and accordingly, an object of the present invention is to provide a flaw detector of a wire-rope, which can enhance the reliability of measurement even though a fracture is present in a deep part of the wire-rope.

Further, another object of the present invention is to provide a flaw detector of a wire-rope, which can reduce calibration working so as to be easily handled.
To solve the problems, the features of the independent claims are suggested. Preferred developments are in the dependent claims

According to the present invention, even though the position of a fracture of a steel wire is located in the inward part of the wire-rope, the depth and the degree of damage of the damaged part can be obtained through the relationships among the values detected by the plurality of magnetic detection means arranged in the circumferential direction of a wire-rope, and the depths and the degrees of damage of the damaged parts which haven been previously stored in the storage, thereby it is possible to enhance the reliability.

### Brief Description of the Several Views of the Drawings

Fig. 1 is a perspective view illustrating a flaw detector of a wire-rope in an embodiment of the present invention;
Fig. 2 is a graph exhibiting relationships among depth of damaged parts, degrees of damage, sums of values detected by a plurality of magnetic detection means, and difference values detected by adjacent magnetic detection means, in the embodiment of the present invention;
Fig. 3 is a sectional view for explaining the positional relationship between the arrangement of the magnetic detection means, and a damaged part in the embodiment of the present invention;
Fig. 4 is a graph exhibiting the relationship between the output value of the magnetic detection means and the angle which is made between the magnetic detection means and a single magnetic pole;
Fig. 5 is a graph exhibiting the relationship between a number of magnetic detection means and a detection sensitiveness in the embodiment of the present invention;
Fig. 6 is a sectional view for explaining positions where the plurality of magnetic detection means are located, in the embodiment of the present invention;
Fig. 7 is a schematic perspective view illustrating the magnetic detection means in the embodiment of the present invention;
Fig. 8 is a perspective view illustrating a flaw detector of a wire-rope in another embodiment of the present invention;
Fig. 9 is a perspective view illustrating a flaw detector of a wire-rope in further another embodiment of the present invention; and
Fig. 10 is a block diagram illustrating a flaw detector of a wire-rope of an illustrative example which is not according to the present invention.

### Detailed Description of the Invention

Explanation will be hereinbelow made of preferable embodiments of the present invention with reference to the accompanying drawings:

### [Embodiment 1]

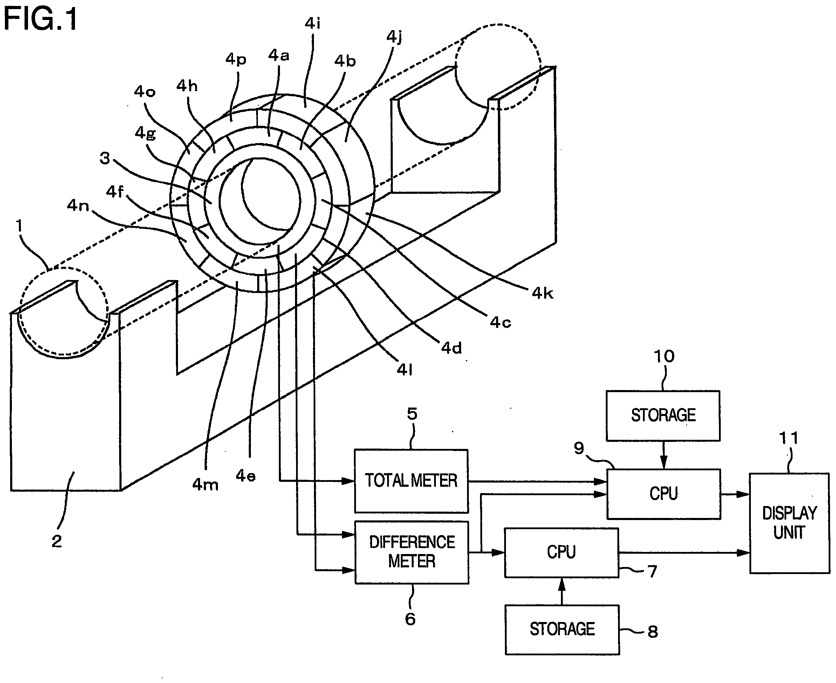

Fig. 1 shows the configuration of a flaw detector of a wire-rope 1.

A magnetizer 2 is arranged so as to magnetize a wire-rope 1 in the longitudinal direction of the latter. There are arranged around the wire-rope 1 a plurality of magnetic detection means (coils and magnetic sensors), that is, a first magnetic detection means 3 for detecting a magnetic flux, laid along the entire periphery of the wire-rope 1, a plurality of second magnetic detection means 4i to 4p and a plurality of third magnetic detection means 4a to 4h, which are arranged in ring-like shapes and which are adjacent to one another along the entire periphery of the wire-rope 1.

The second magnetic detection means 4a to 4h and the third magnetic detection means are shifted in their phases from each other by 90 deg., that is, the magnetic detection means 4i spans in its intermediate part between the magnetic detection means 4a and 4b, 4j between 4b and 4c, similarly, 4k to 4p between 4a to 4h, respectively. An output from the first magnetic detection means 3 is delivered to a total meter 5, and outputs from the second magnetic detection means 4a to 4h and the third magnetic detection means 4i to 4p are delivered to a difference meter 6. A/D conversion for input signals are carried out in the total meter 5 and the difference meter 6.

Signals after the conversion are delivered into a first CPU 7 for calculating a ratio between signals from the difference meter 6 and the total meter 5, and delivers a signal exhibiting a depth of damage based upon values of depths of damage with respect to signal ratios, which are stored in a storage 8, to a display unit 11. A second CPU 9 calculates a degree of damage from a signal from the total meter 5 a signal from the difference meter 6, and data of threshold values stored in the storage for diagnosis.
Next, explanation will be made of the diagnostic logics of the first CPU 7 and the second CPU 9 shown in Fig. 1. In the case that a damaged part is located at a position which is shallow in the wire-rope 1 as measured from the outer surface of the wire-rope 1, at the center of the magnetic detection means 4a, that is, the magnetic detection means is located on the circumference of a circle having a radius of 7 mm while the damaged part is located at a position having a distance of 6 mm from the center of the wire-rope 1, a difference between outputs from the magnetic detection means 4a, 4b is about 98 %.

Thus, the deeper the damaged part in the wire-rope, the smaller the difference in output between the magnetic detection means near the damaged part, and the magnetic detection means adjacent to the former means, that is, for example, the difference in output is 71 % if the distance from the damaged part to the center of the wire-rope is 4 mm, while the difference in output is 27 % if the distance from the damaged part to the center is 2 mm. The further the damaged part from the center or the shallower the damaged part, the larger the output ratio. Thus, storing the above-mentioned relationship in the storage 8, the depth of the damaged part can be calculated by the first difference meter 6.

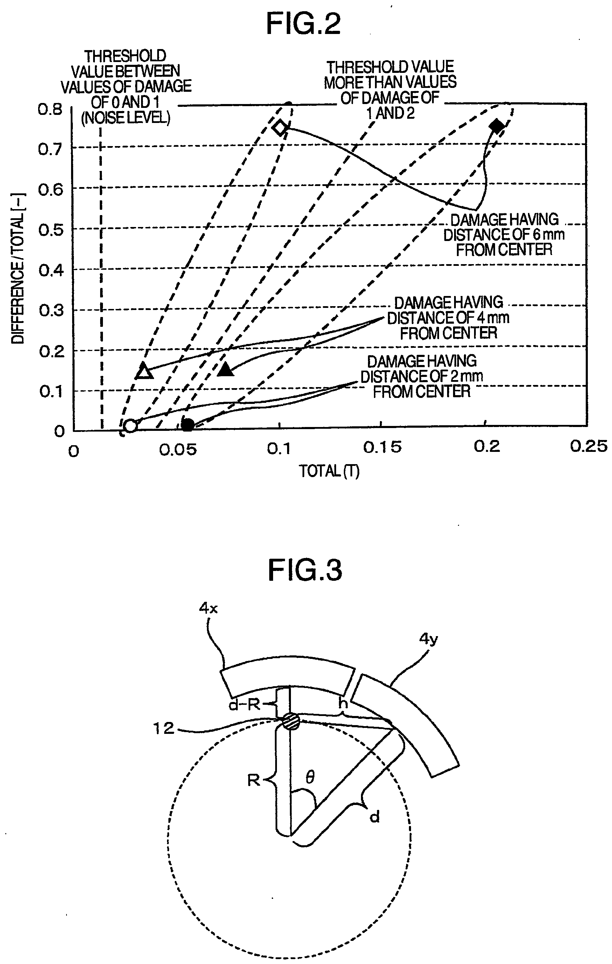

Fig. 2 shows examples in the cases that, as to the relationship between a ratio of a difference value and a total value, and the total value, the damaged values (the number of damaged parts) are 1 and 2, and the distance from the damaged part to the center of the rope are 2 mm, 4 mm and 6 mm. In this case, the sum of the absolute value of a difference from the second detection means and the absolute value of a difference value from the third detection means is used as the difference value.

With reference to Fig. 2, if the degrees of damage are equal to each other, date are plotted in a substantially straight-like manner. From this reason, a threshold value is set at an intermediate position between the damaged value 1 and the damaged value 2, and it is diagnosed that the degree of damage is not less than 2 if the degree of damage exceeds the threshold value. Further, it is diagnosed that the degree of damage is 0 if the degree of damage is less than a noise level which has been previously obtained through experiments or the like. The storage 10 has been stored therein with threshold values and values of noise levels, as stated above, and the second CPU 9 delivers the damaged value to the display unit 11.

The storages 8, 10 may be stored therein with, for example, relationships among depths of damage, total values and difference values, from which a depth of damage and a degree of damage may be obtained.

Next, explanation will be made of differences between the outputs of the second magnetic detection means 4a to 4h and the third detection means 4i to 4p shown in Fig. 1.

If a damaged part is present between the magnetic detection means 4a and 4b, outputs from the magnetic detection means 4a, 4b are equal to each other. Accordingly, the difference value becomes 0 at this time. At this time, as to the third detection means 4i to 4p, the damaged part is located at the center of the magnetic detection means 4i. Thus, difference values are obtained from outputs from the magnetic detection means 4i to 4p. Thus, the third detection means are located, intermediate of the second detection means 4a to 4h in order to obtain difference values from the outputs from the third detection means even though the difference values of the output from the second detection means becomes 0.

In the above-mentioned example, eight magnetic detection means are provided in total as the second magnetic means 4a to 4h and the third detection means 4i to 4p, respectively.

In the case of eight magnetic detection means, the difference in output between a magnetic detection means 4y which delivers a peak value and a magnetic detection means 4x or 4z, which is adjacent thereto, becomes about 98 %. Meanwhile, if the number of the magnetic detection means is 72, a difference in output between the magnetic detection means 4y which delivers a peak value, and the magnetic detection means 4x or 4z which is adjacent thereto becomes about 33 %. As to the calculation of the difference values, the difference in output between a magnetic detection means which delivers a peak output value, and a magnetic detection means which is adjacent thereto becomes largest while the difference in output between the other magnetic detection means becomes small, and accordingly, no diagnosis can be made if no difference in output between the magnetic detection means which delivers a peak output and the magnetic detection means which is adjacent to the former obtained can be obtained.

Further, as to the calculation for the difference value, since the outputs from the two magnetic means which are adjacent to the magnetic detection means which delivers the peak output is subtracted from the peak output, the peak output is set to a value which is at least larger than two times as large as the output from the adjacent magnetic detection means.

Since the magnetic flux is inversely proportional to the square of a distance, a total number of the magnetic detection means is calculated from the positional relationships between the damaged part and the magnetic detection means, as shown in Fig. 3, and the relationship among magnitudes of magnetic fluxes.

As shown in Fig. 3, the distance h from the magnetic detection means 4y to the damaged part 12 can be obtained by the theorem of cosine: h² = R² + d² - 2Rdcosθ where R is a distance from the damaged part to the center of the wire-rope, d is a distance from the center of the wire-rope to the magnetic detection means, and θ is an included angle between the magnetic detection means 4x and 4y with respect to the center of the wire-rope.

Next, since the output of the magnetic detection means is inversely proportional to the square of the distance from the damaged part, the following relation is given: B1 : B2 = 1/(R - D)² : 1/h² where B1 is the output of the magnetic detection means 4x and B2 is the output of the magnetic detection means 4y. At this time, since B1/B2 > 0, B1/B2 = h²/(R - D)² = (R² + d² - 2Rdcosθ/(R - D)² > 2 is obtained, resulting in cosθ < (R² + d² - 2 (R - d)²) /2Rd, since the number N of the magnetic detection means is set in the way that 2π is divided by θ, the number N of the magnetic detection means may be set to N < 2π/(cos⁻¹((R² + d² - 2(R-d)²)/2Rd)).

Next, the lower limit of the number N of the magnetic detection means will be explained hereinbelow.

The number of the second magnetic detection means has to be set to at least two since a difference value should be obtained therefrom. If the damaged part 12 is located at the center of the magnetic detection means 4x, the damaged part 12 is longer from the magnetic distance 4y. In this case, the magnetic fluxes of the magnetic detection means 4x, 4y at their centers are different from each other, and accordingly, the difference value can be obtained, literally. Thus, the number of the respective first and second magnetic means is set to be not less than two.

However, the smaller the number of the magnetic detection means, the wider the area in which a leakage magnetic flux caused by a damage should be detected by the magnetic detection means which detect a value of an averaged magnetic flux density, and a variation in the magnetic flux density within the area, and accordingly, if the magnetic flux caused by a damage is constant while the magnetic flux density become larger only in a specific zone in the detection area of the magnetic detection means, should the detection area of the magnetic detection means be larger, the sensitivity would be lower.

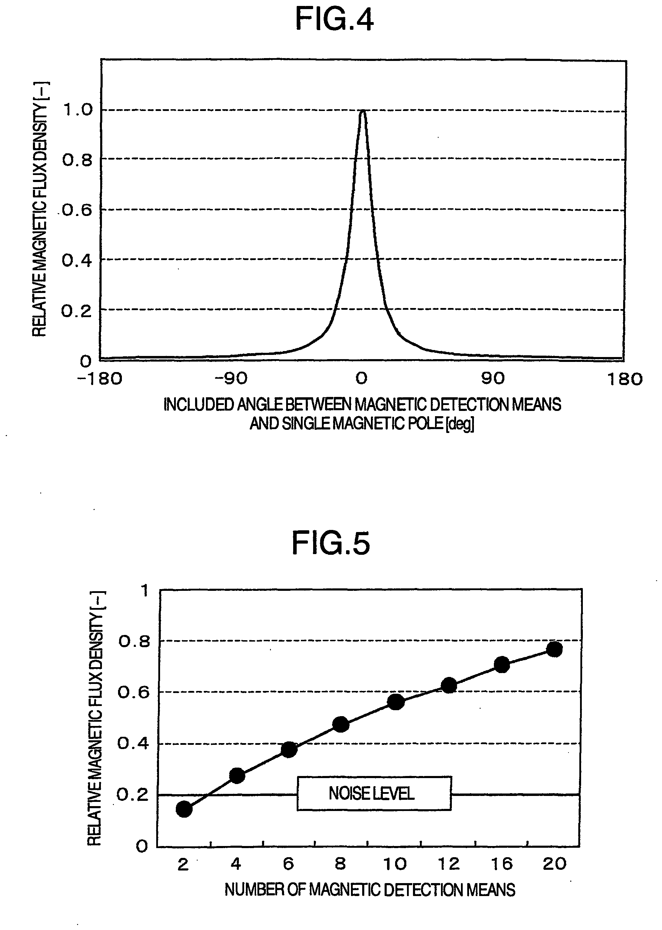

Referring to Fig. 4 in which it is estimated that a single magnetic pole 13 is present at a position having a distance of 6 mm from the center of the wire-rope while the magnetic detection means 4x is located at a position having a distance of 7 mm from the center of the wire-rope, with the included angle θ between the single magnetic pole 13 and the magnetic detection means 4x with respect to the center of the wire-rope, there is shown a relationship between θ and the relative magnetic flux density, a measured value being set to be 1 as θ is 0, that is, as the magnetic detection means 4x is present on a straight line extending between the center of the wire-rope and the single magnetic pole 13, that is, it can be found from Fig. 4 that the magnetic flux density becomes smaller as it is further from θ = 0.

Further, the magnetic detection means delivers an output in the form of an averaged value over an area covered by the magnetic detection means. For example, if the number of the magnetic detection value is two, the area covered by the single magnetic detection means corresponds to an angel of 180 deg., while, the number of the magnetic detection means is 8, the area covered by the single magnetic detection means corresponds to an angle of 45 deg, the smaller the number of the magnetic means, the lower the sensitiveness.

Fig. 5 shows the relationship between the number of the magnetic detection means and outputs of the magnetic detection mean. The calculated value inevitably includes noises caused by affection of concavities and convexities of strands, rattling during measurement and the like. The noises are allowable if it is 20 % of a peak value although it depends upon a measuring way. As understood from Fig. 5, since noises become dominant in the case of two magnetic detection means, it is preferably to set the number of the magnetic detection means to not less than 4 but not greater than 20 in practice.

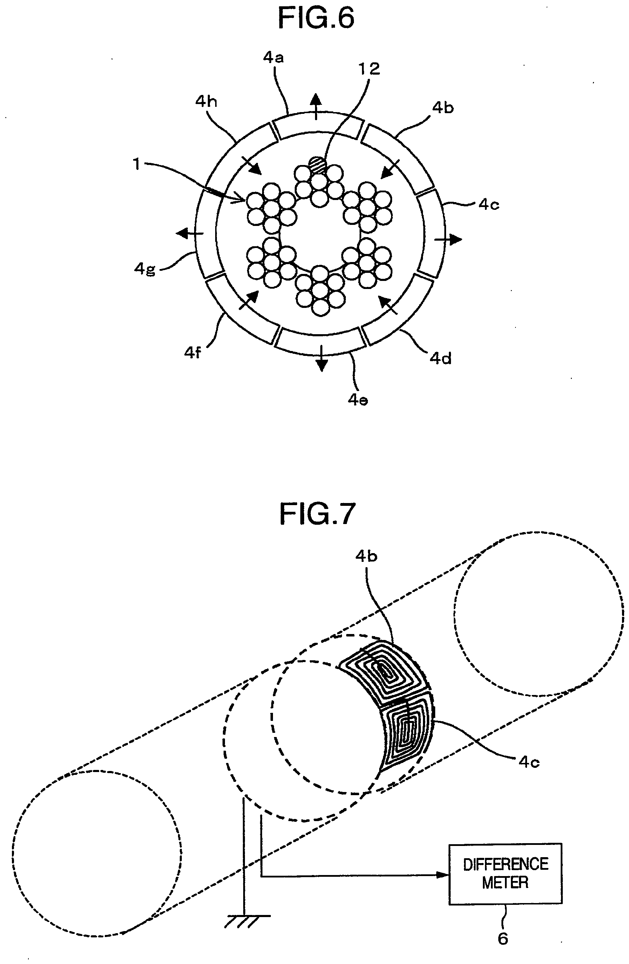

In the above-mentioned example, the difference values in output from the second or third magnetic detection means are measured. Accordingly, the magnetic detection means are mounted with the directions of their sensitiveness being determined when the magnetic detection means are arranged. Referring to Fig. 6 which shows an example of the arrangement of the magnetic detection means 4a to 4h, the magnetic detection means 4a, 4c, 4e and 4g are located so that they deliver positive outputs with respect to magnetic fluxes outward from the center of the wire-rope, and the remaining magnetic detection means are arranged so that they deliver negative outputs with respect to magnetic fluxes outward from the center of the wire-rope.

Thus, the value of difference can be obtained from the sum of outputs from the respective magnetic means. Referring to Fig. 7 which shows the case that coils are used, the directions of winding of the coils are alternately reversed in order to set the directions of sensitiveness to be alternate, all coils being connected in series so as to obtain a difference value.

It is noted that the magnetic detection means may be those which can detect a circumferential magnetic flux distribution, and accordingly, for example, the sum of the outputs from a plurality of divided magnetic detection means may be used, being substituted for the outputs of the magnetic detection means. However, in this case, the intervals of the respective magnetic means should be set to be small in order to a peak of a leakage flux caused by damage can be surely measured.

### [Embodiment 2]

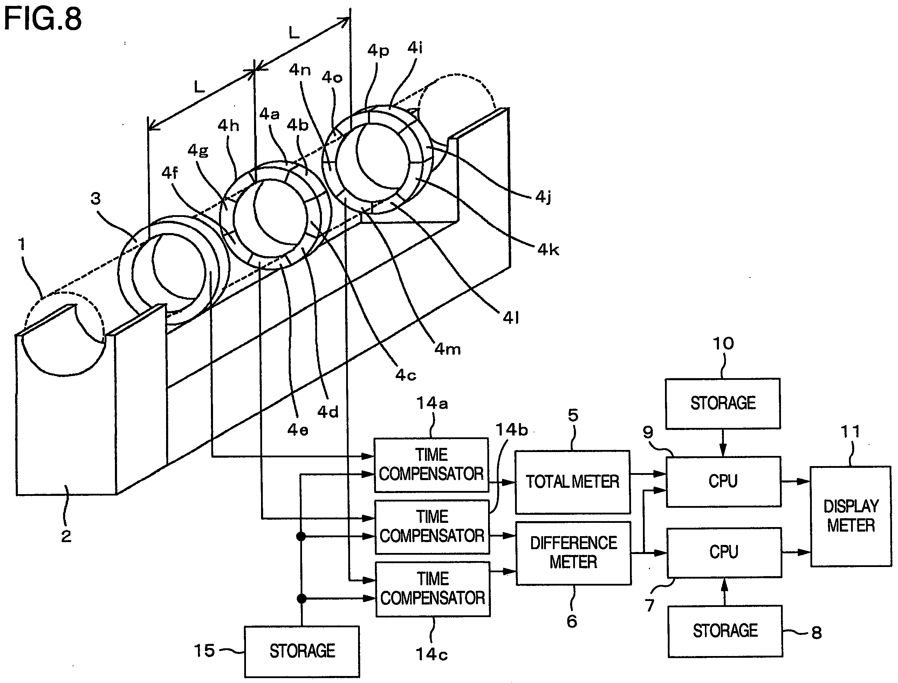

Referring to Fig. 8 which shows a second embodiment, the first magnetic detection means, the second magnetic detection means 4a to 4h and the third magnetic detection means 4i to 4p are arranged being shifted from one another in the longitudinal direction of the wire-rope. This configuration can facilitate the mounting of the magnetic detection means onto the wire-rope since their respective wirings are not overlapped with one another.

Further, time compensators 14a to 14c are provided so that output values from the respective magnetic detection means exhibit measured data in the one and the same section of the wire-rope. That is, during measurements, when the wire-rope 1 is travelled, the outputs of the magnetic detection means are delayed by 2L/v where v is traveling speed (m/sec), and L is a distance (m) by which the magnetic detection means 3 and the magnetic detection mean 4a to 4h and 4i to 4p are shifted from one another, in the case that the wire-rope passes at first through the magnetic detection means 3, then passes by the magnetic detection means 4a to 4h, and finally passes by the magnetic detection means 4i to 4p, that is, the processing of the outputs of the magnetic detection means 4a to 4h are made by delaying their outputs by 2L/V.

Further, a storage 15 is stored therein with values of correction times with respect to speeds of the wire-ropes, and accordingly, the time compensators 14a to 14c carry out the time correction, being based upon these values, and the results thereof are delivered from the total meter 5 and the difference meter 6.

### [Embodiment 3]

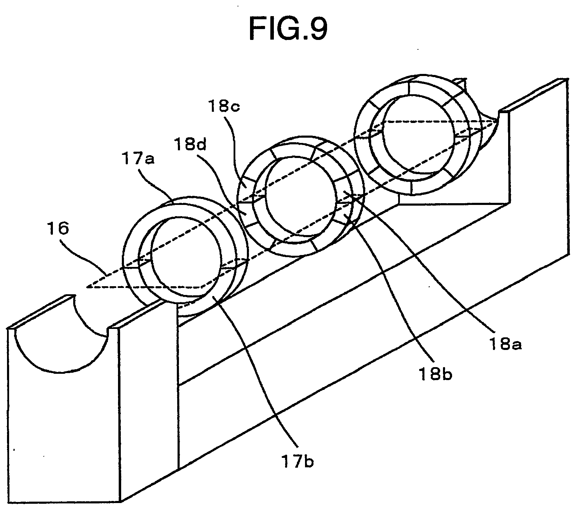

Fig. 9 shows a third embodiment in which a wire-rope on use is fixed at its ends, the flaw detector is split into a plurality of sensor units so that the flaw detector can be easily inserted onto the wire-rope.

As shown in Fig. 9, if it is bisplit at a split plane 16, in the first magnetic detection means, two halves, that is, magnetic detection means 17a and 17b are connected so that the sum of outputs therefrom is delivered. As to the magnetic detection means 4a to 4h and the magnetic detection means 4i to 4p, some of them would be possibly located at the split plane 16, and accordingly, each of the some crossing the split plane 16 is split into two parts whose sensitivities are adjusted so that the sum of outputs from them is equal to the output of the magnetic detection means which has not yet been split.

Specifically, as shown in Fig. 9, in the case of the split plane 16 extending through the center of the magnetic detection means 4c, two magnetic detection means 18a and 18b are arranged interposing therebetween the split plane 16, instead of the magnetic detection means 4c, and the sensitivities thereof are set to a value which is one half of that of the magnetic detection means 4c. Similarly, two magnetic detection means 18a and 18d are arranged, instead of the magnetic detection means 4g.

If coils are used as the magnetic detection means, their numbers of turns may be set to be equal to one another while their sectional areas are set to one-half of that of the original magnetic detection means. It is noted that the adjustment for the sensitivity may be always made not only by the adjustment to the sectional area but also by the adjustment to the number of turns, the adjustment to an electric gain made by an amplifier, or by the combination thereof.

### [Fourth Embodiment]

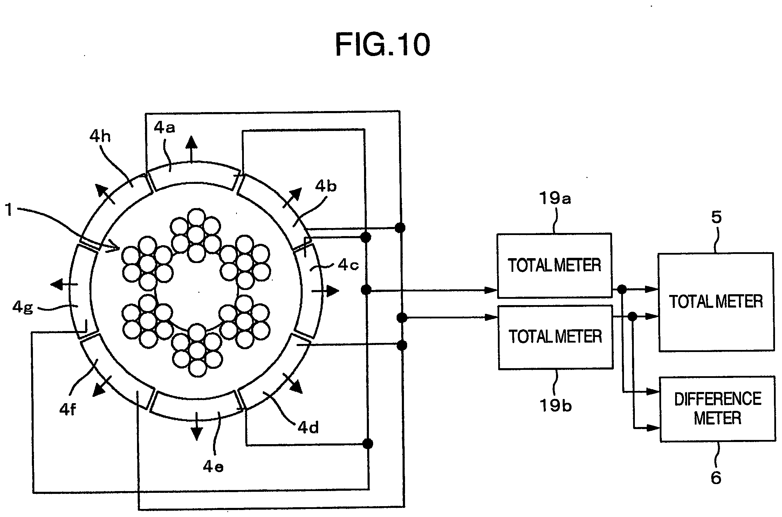

Fig. 10 shows an example which is not according to the invention in which the second and third magnetic detection means are laid along the entire periphery of the wire-rope while the first magnetic detection means is omitted.

Referring to Fig. 10, the sum of outputs from the magnetic detection means 4a, 4c, 4e and 4g is measured by a single total meter 19a while the sum of outputs from the magnetic detection means 4b, 4d, 4f and 4h is measured by a single total meter 19b. Further, the sum of outputs from the total meter 19a and the total meter 19b corresponds to the total value measured by the first magnetic detection means, and the difference between the outputs from the total meter 19a and the total meter 19b corresponds to the difference value measured by the second magnetic detection means. In view of this configuration, the first magnetic detection means can be omitted, and further, the burden of the calibration for the respective magnetic detection means can be reduced.

## Claims

1. A flaw detector of a wire-rope (1) composed of steel wires which are twisted, in which magnetic flux is led through the wire-rope (1) in the longitudinal direction thereof, wherein the detector is adapted to measure a leakage magnetic flux caused by a damaged part of the steel wire, comprising:
a magnetizer (2) adapted to magnetize the wire-rope (1) in the longitudinal direction thereof;
a first magnetic detection means (3) for detecting a magnetic flux over the entire circumference of the wire-rope (1);
a plurality of second magnetic detection means (4a-4h);
a plurality of third magnetic detection means (4i-4p),
wherein the plurality of second magnetic detection means (4a - 4h) are arranged in the circumferential direction of the wire-rope (1) for detecting the leakage magnetic flux, and
wherein the plurality of third magnetic detection means (4i - 4p) are arranged in the circumferential direction of the wire-rope (1) for detecting the leakage magnetic flux in such a manner that the plurality of third magnetic detection means (4i - 4p) are shifted in phase from the plurality of second magnetic detection means (4a-4h) so that a magnetic detection means 4i of the plurality of third magnetic detection means (4i-4p) spans in its intermediate part between magnetic detection means 4a and 4b of the plurality of second magnetic detection means and similarly magnetic detection means 4j to 4p of the plurality ofthird magnetic detection means (4i-4p) between magnetic detection means 4a to 4h, respectively;
a total meter (5) whereto an output of the first magnetic detection means (3) is delivered and wherein a total value of the leakage magnetic flux is measured;
a difference meter (6) whereto outputs of the second magnetic detection means (4a - 4h) and respectively the third magnetic detection means (4i - 4p) are delivered, wherein the difference meter (6) is adapted to measure the sum of the difference in output from the respective second magnetic detection means (4a-4h) and the respective third magnetic detection means (4i-4p), wherein the difference in output is the difference in output between a magnetic detection means (4x) located near a damaged part of the rope (1) and a magnetic detection means (4y) located adjacent to the magnetic detection means (4x) which is located near the damaged part of the rope (1), wherein the magnetic detection means (4x) located near a damaged part of the rope (1) and the magnetic detection means (y) located adjacent to the magnetic detection means (4x) which is located near the damaged part of the rope (1) are provided within the same of the second orthird magnetic detection means;
a storage (8, 10);
a first CPU (7) adapted to receive signals from the difference meter (6) and the total meter (5), and adapted to calculate a ratio between signals from the difference meter (6) and the total meter (5), and adapted to deliver a signal exhibiting a depth of damage based upon the relationship between depth of damage and signal ratios, which have been previously stored in the storage (8, 10);
a second CPU (9) adapted to calculate a degree of damage from the signal from the total meter (5), the signal from the difference meter (6), and data of threshold values stored in the storage (8, 10).

2. A flaw detector as set forth in at least one of the preceding claims, wherein the number N of the magnetic detection means (4a-4p) within the second magnetic detection means (4a-4h) and the third magnetic detection means (4i-4p) is set to be not less than 2 but not greater than 2π/(cos⁻¹((R²+d²-2(d-R)²/2Rd)) where R is a distance from the center of the wire-rope (1) to one of supposed damages which is furthest from the center of the wire-rope (1), and d is a distance between the magnetic detection means and the center of the wire-rope (1).

3. A flaw detector as set forth in claim 1, wherein the number N of the magnetic detection means (3,4a-4p) is not less than 4 but not greater than 20.

## Patentansprüche

1. Fehlerdetektor für ein Stahlseil (1), das aus verdrillten Stahldrähten aufgebaut ist, wobei ein Magnetfluss durch das Stahlseil (1) in dessen Längsrichtung geschickt wird, wobei der Detektor dafür ausgelegt ist, einen Leck-Magnetfluss, der durch einen beschädigten Teil des Stahlseils verursacht wird, zu messen, umfassend:
eine Magnetisierungseinrichtung (2), die dafür ausgelegt ist, das Stahlseil (1) in dessen Längsrichtung zu magnetisieren;
ein erstes magnetisches Detektionsmittel (3) zum Detektieren eines Magnetflusses um den gesamten Umfang des Stahlseils (1);
mehrere zweite magnetische Detektionsmittel (4a-4h);
mehrere dritte magnetische Detektionsmittel (4i-4p),
wobei die mehreren zweiten magnetischen Detektionsmittel (4a-4h) in Umfangsrichtung des Stahlseils (1) angeordnet sind, um den Leck-Magnetfluss zu detektieren, und
wobei die mehreren dritten magnetischen Detektionsmittel (4i-4p) in Umfangsrichtung des Stahlseils (1) angeordnet sind, um den Leck-Magnetfluss in der Weise zu detektieren, dass die mehreren dritten magnetischen Detektionsmittel (4i-4p) zu den mehreren zweiten magnetischen Detektionsmitteln (4a-4h) phasenverschoben sind, so dass ein magnetisches Detektionsmittel 4i der mehreren dritten magnetischen Detektionsmittel (4i-4p) in seinem mittleren Teil sich zwischen magnetischen Detektionsmitteln 4a und 4b der mehreren zweiten magnetischen Detektionsmittel erstreckt und ebenso magnetische Detektionsmittel 4j bis 4p der mehreren dritten magnetischen Detektionsmittel (4i-4p) sich zwischen entsprechenden magnetischen Detektionsmitteln 4a bis 4h erstrecken;
eine Gesamtmesseinrichtung (5), an die ein Ausgang des ersten magnetischen Detektionsmittels (3) geliefert wird und in der ein Gesamtwert des Leck-Magnetflusses gemessen wird;
eine Differenzmesseinrichtung (6), an die die Ausgänge der zweiten magnetischen Detektionsmittel (4a-4h) bzw. der dritten magnetischen Detektionsmittel (4i-4p) geliefert werden, wobei die Differenzmesseinrichtung (6) dafür ausgelegt ist, die Summe der Differenz im Ausgang der jeweiligen zweiten magnetischen Detektionsmittel (4a-4h) und der jeweiligen dritten magnetischen Detektionsmittel (4i-4p) zu messen, wobei die Differenz im Ausgang die Differenz im Ausgang zwischen einem magnetischen Detektionsmittel (4x), das sich in der Nähe eines beschädigten Teils des Seils (1) befindet, und einem magnetischen Detektionsmittel (4y), das sich in der Nähe des magnetischen Detektionsmittels (4x) befindet, das sich in der Nähe des beschädigten Teils des Seils (1) befindet, ist, wobei das magnetische Detektionsmittel (4x), da sich in der Nähe eines beschädigten Teils des Seils (1) befindet, und das magnetische Detektionsmittel (4y), da sich in der Nähe des magnetischen Detektionsmittels (4x) befindet, da sich in der Nähe des beschädigten Teils des Seils (1) befindet, in denselben der zweiten oder der dritten magnetischen Detektionsmittel vorgesehen sind;
einen Speicher (8, 10);
eine erste CPU (7), die dafür ausgelegt ist, Signale von der Differenzmesseinrichtung (6) und der Gesamtmesseinrichtung (5) zu empfangen, und dafür ausgelegt ist, ein Verhältnis zwischen Signalen von der Differenzmesseinrichtung (6) und der Gesamtmesseinrichtung (5) zu berechnen, und dafür ausgelegt ist, anhand der Beziehung zwischen der Tiefe der Beschädigung und den Signalverhältnissen, die vorher in dem Speicher (8, 10) gespeichert worden sind, ein Signal auszugeben, das eine Tiefe der Beschädigung angibt;
eine zweite CPU (9), die dafür ausgelegt ist, einen Grad der Beschädigung aus dem Signal von der Differenzmesseinrichtung (6) und aus Daten von Schwellenwerten, die in dem Speicher (8, 10) gespeichert sind, zu berechnen.

2. Fehlerdetektor nach wenigstens einem der vorhergehenden Ansprüche, wobei die Anzahl N der magnetischen Detektionsmittel (4a-4p) unter den zweiten magnetischen Detektionsmittein (4a-4h) und den dritten magnetischen Detektionsmitteln (4i-4p) so eingestellt ist, dass sie nicht kleiner als 2 ist, jedoch nicht größer als 2π/(cos⁻¹((R²+d²)-2(d-R)²/2Rd)) ist, wobei R ein Abstand von der Mitte des Stahlseils (1) zu einer der vermuteten Beschädigungen, die sich am weitesten von der Mitte des Stahlseils (1) entfernt befindet, ist und d ein Abstand zwischen dem magnetischen Detektionsmittel und der Mitte des Stahlseils (1) ist.

3. Fehlerdetektor nach Anspruch 1, wobei die Anzahl N der magnetischen Detektionsmittel (3, 4a-4p) nicht kleiner als 4, jedoch nicht größer als 20 ist.

## Revendications

1. Détecteur de failles dans un câble métallique (1) composé de fils d'acier qui sont torsadés, dans lequel un flux magnétique est mené à travers le câble métallique (1) dans la direction longitudinale de celui-ci, dans lequel le détecteur est adapté à mesurer un flux magnétique de fuite provoqué par une partie endommagée du fil d'acier, comprenant :
un dispositif d'aimantation (2) adapté pour aimanter le câble métallique (1) dans la direction longitudinale de celui-ci ;
un premier moyen de détection magnétique (3) pour détecter un flux magnétique sur la circonférence entière du câble métallique (1) ;
une pluralité de seconds moyens de détection magnétique (4a-4h) ;
une pluralité de troisièmes moyens de détection magnétique (4i-4p),
dans lequel la pluralité de seconds moyens de détection magnétique (4a-4h) sont agencés dans la direction circonférentielle du câble métallique (1) pour détecter le flux magnétique de fuite, et
dans lequel la pluralité de troisièmes moyens de détection magnétique (4i-4p) sont agencés dans la direction circonférentielle du câble métallique (1) pour détecter le flux magnétique de fuite d'une manière telle que la pluralité de troisièmes moyens de détection magnétique (4i-4p) sont décalés en phase par rapport à la pluralité de seconds moyens de détection magnétique (4a-4h), de telle façon qu'un moyen de détection magnétique (4i) de la pluralité de troisièmes moyens de détection magnétique (4i-4p) effectue, dans sa partie intermédiaire, un pontage entre les moyens de détection magnétique (4a et 4b) de la pluralité de seconds moyens de détection magnétique, et de façon similaire des moyens de détection magnétique (4j à 4p) de la pluralité de troisièmes moyens de détection magnétique (4i-4p) effectuent un pontage entre les moyens de détection magnétique (4a à 4h), respectivement ;
un dispositif de métrologie totale (5) auquel est fournie une sortie du premier moyen de détection magnétique (3) et dans lequel une valeur totale du flux magnétique de fuite est mesurée ;
un dispositif de métrologie différentielle (6) auquel sont fournies des sorties du second moyen de détection magnétique (4a-4h) et respectivement du troisième moyen de détection magnétique (4i-4p), dans lequel le dispositif de métrologie différentielle (6) est adapté à mesurer la somme de la différence des sorties provenant du second moyen de détection magnétique respectif (4a-4h) et du troisième moyen de détection magnétique respectif (4i-4p),
dans lequel la différence des sorties est la différence des sorties entre un moyen de détection magnétique (4x) situé proche d'une partie endommagée du câble (1) et un moyen de détection magnétique (4y) situé adjacent au moyen de détection magnétique (4x) qui est situé à proximité de la partie endommagée du câble (1), dans lequel le moyen de détection magnétique (4x) situé à proximité d'une partie endommagée du câble (1) et le moyen de détection magnétique (y) situé adjacent au moyen de détection magnétique (4x) qui est situé à proximité de la partie endommagée du câble (1) sont dotés d'un second ou un troisième moyen de détection magnétique identique ;
un stockage (8, 10) ;
une première unité de traitement centrale (7) adaptée pour recevoir des signaux provenant du dispositif de métrologie différentielle (6) et du dispositif de métrologie totale (5), et adaptée pour calculer un rapport entre des signaux provenant du dispositif de métrologie différentielle (6) et du dispositif de métrologie totale (5), et adaptée pour fournir un signal présentant une profondeur d'endommagement sur la base de la relation entre la profondeur des rapports endommagement/signal, qui ont été précédemment stockés dans le stockage (8, 10) ;
une seconde unité de traitement centrale (9) adaptée pour calculer un degré d'endommagement à partir du signal provenant du dispositif de métrologie totale (5), du signal provenant du dispositif de métrologie différentielle (6), et de données concernant des valeurs seuil stockées dans le stockage (8, 10).

2. Détecteur de failles selon l'une au moins des revendications précédentes, dans lequel le nombre N des moyens de détection magnétique (4a-4p) à l'intérieur du second moyen de détection magnétique (4a-4h) et le troisième moyen de détection magnétique (4i-4p) est choisi pour ne pas être inférieur à 2, mais pas supérieur à 2p/(cos⁻¹((R²+d² -2(d-R)²/2Rd)), dans laquelle R est une distance depuis le centre du câble métallique (1) jusqu'à l'un des endommagements supposés qui est le plus éloigné du centre du câble métallique (1), et d est une distance entre le moyen de détection magnétique et le centre du câble métallique (1).

3. Détecteur de failles selon la revendication 1, dans lequel le nombre N des moyens de détection magnétique (3, 4a-4p) n'est pas inférieur à 4, mais n'est pas supérieur à 20.
